# EUROPÄISCHE PATENTSCHRIFT

(11) **EP 2 682 362 B1**
(45) Veröffentlichungstag und Bekanntmachung des Hinweises auf die Patenterteilung: **15.10.2014**
(21) Anmeldenummer: 13003296.4
(22) Anmeldetag: 28.06.2013
(51) Int. Cl.: B68B 11/00, A01K 27/00, B68B 1/00

(54) **Longiermittel**
Lunging equipment
Moyen de longe

(30) Priorität: 02.07.2012 DE 202012006319 U
(43) Veröffentlichungstag der Anmeldung: 08.01.2014
(73) Patentinhaber: Hachmeier, Jürgen, 33034 Brakel (DE)
(72) Erfinder: Hachmeier, Jürgen, 33034 Brakel (DE)
(74) Vertreter: Sieling, Carola

(56) Entgegenhaltungen:
- DE-U1-202010 006 551
- US-A- 4 154 391

## Beschreibung

### 1. Technisches Gebiet:

Die vorliegende Erfindung betrifft ein Longiermittel zum Führen von Pferden.

### 2. Stand der Technik:

Zur Ausbildung und zum Training von Pferden wird das Longieren angewandt. Beim Longieren wird das Pferd auf einer kreisförmigen Bahn (Longierzirkel) laufen gelassen, wobei es vom Longenführer an der Longe (einer Leine) geführt wird. Der Longenführer steht hierbei im Zentrum der Kreisbahn und hält die mit dem Zaumzeug des Pferdes verbundene Longe in einer Hand. Diese Technik besitzt den Nachteil, dass die Longe in Abhängigkeit von den Bewegungen des Pferdes nur durch manuelles Ausgeben und Einholen straff gehalten werden kann, was aufwändig ist. Da die Longe unmittelbar durch die Innenfläche der Hand läuft kann sie ferner insbesondere bei plötzlichen ruckartigen Bewegungen Verletzungen verursachen. Will der Longenführer beim Longieren korrigierend auf das Pferd einwirken, kann er als zusätzliches Hilfsmittel eine lange Peitsche - die Longierpeitsche - verwenden. Diese muss er dann allerdings in der anderen Hand halten, wodurch beide Hände benötigt werden und belegt sind.

Die DE 20 2010 006 551 U1 offenbart ein Führ- und Longiermittel, welches aus einem Gehäuse mit Handgriff besteht und welches eine Auf- und Abwickeleinrichtung zum Ausgeben und selbsttätigen Aufwickeln der Longe aufweist. Ferner umfasst das Führ- und Longiermittel eine Arretierungsvorrichtung zum reversiblen Fixieren der Longe. Die Arretierungsvorrichtung kann mittels eines Abzuges mit einem Finger bedient werden. Diese Vorrichtung besitzt den Vorteil, dass sie ein vereinfachtes Ausgeben und Einholen der Longe durch die Bedienung der Arretierungsvorrichtung mit einem Finger ermöglicht. Auch diese Vorrichtung besitzt jedoch den Nachteil, dass der Longenführer bei gleichzeitiger Verwendung von Longe und Peitsche beide Hände benutzen muss.

Die DE 20 2006 002 600 U1 beschreibt eine Longierleine mit Aufroll- und Stoppmechanismus, eingefasst in einem Gehäuse mit integriertem Handgriff. Auch eine Longierleine der beschriebenen Art besitzt den Vorteil, dass sie einhändig bedient werden kann und ein vereinfachtes Ausgegeben und ein einfaches selbsttätiges Einholen der Longe durch die integrierten Aufroll- und Stoppmechanismen ermöglicht. Auch diese Vorrichtung besitzt allerdings den Nachteil, dass der Longenführer bei gleichzeitiger Verwendung von Longe und Peitsche beide Hände benutzen muss.

Durch die DE 90 03 991.2 U1 wird eine Longierleine mit einer in einem Gehäuse drehbeweglich gelagerten, federbelasteten Trommel und einer Sperre für die Trommel vorgeschlagen. Die DE 90 03 991.2 U1 sieht ferner vor, dass das Gehäuse mit einen angeformten Griff ausgebildet ist, indem eine Verriegelungstaste für die Sperre der Trommel angeordnet ist. Die Longierleine ermöglicht ein vereinfachtes Ausgegeben und ein einfaches selbsttätiges Einholen der Longe und kann einhändig bedient werden. Auch diese Vorrichtung besitzt jedoch den Nachteil, dass der Longenführer bei gleichzeitiger Verwendung von Longe und Peitsche beide Hände benutzen muss.

Die DE 79 15 896 U1 beschreibt eine Vorrichtung zum Führen von Tieren mittels einer Leine, mit einer in einem Lagergehäuse drehbar gelagerten, unter der Wirkung einer Spiralfeder stehenden Trommel zum Abwickeln der Leine und mit einer unter Federkraft selbsttätig klemmenden und mittels des Daumens lösbaren Klemmvorrichtung. Das Lagergehäuse sieht ferner einen tangential zur Trommel angeordneten Griff vor. Die Vorrichtung ermöglicht ein vereinfachtes Ausgegeben und ein einfaches selbsttätiges Einholen der Leine und kann einhändig bedient werden. Auch diese Vorrichtung besitzt jedoch den Nachteil, dass der Benutzer bei gleichzeitiger Verwendung einer Leine und einer Peitsche beide Hände benutzen muss.

Die Offenlegungsschrift DE 28 52 907 offenbart eine Vorrichtung zur Aufnahme des überschießenden Teils der Longe beim Longieren und sieht hierfür ein mit einem Handgriff versehenes tragbares Lagergestell für eine mittels einer Spiralfeder antreibbaren Spule zum Aufwickeln und einer Klemmvorrichtung zum Festklemmen der Longe vor. Die Klemmvorrichtung kann im Daumenbereich der den Handgriff umfassenden Hand vorgesehen sein. Die Vorrichtung ermöglicht ein vereinfachtes Ausgegeben und ein einfaches selbsttätiges Einholen der Leine und kann einhändig bedient werden. Auch diese Vorrichtung besitzt jedoch den Nachteil, dass der Benutzer bei gleichzeitiger Verwendung einer Leine und einer Peitsche beide Hände benutzen muss.

### 3. Darstellung der Erfindung:

Der Erfindung liegt die Aufgabe zugrunde, ein einhändig bedienbares Longiermittel zu schaffen, welches ein einfaches Ausgeben und ein selbsttätiges Einholen der Leine ermöglicht und gleichzeitig die Benutzung einer Longierpeitsche mit derselben Hand ermöglicht.

Die Aufgabe wird erfindungsgemäß durch ein Longiermittel mit den Merkmalen des Anspruchs 1 gelöst, vorteilhafte Ausführungen sind in den Unteransprüchen beschrieben.

Die Grundlage der Erfindung bildet ein Longiermittel, bestehend aus einem mit einem Handgriff ausgebildeten Gehäuse, einer in dem Gehäuse drehbeweglich gelagerten, in Aufrollrichtung federbelasteten Rolle zur Aufnahme und Ausgabe einer Leine und einer mechanisch wirkenden Arretierungsvorrichtung zur lösbaren Arretierung der Rolle, wobei die Arretierungseinrichtung derart ausgestaltet ist, dass sie mit der am Handgriff befindlichen Hand bedient werden kann, dadurch gekennzeichnet, dass das Gehäuse mit mindestens einem Mittel zur lösbaren Befestigung des Griffs einer Longierpeitsche in paralleler Ausrichtung zur Verlaufsrichtung der Leine ausgebildet ist. Die Federbelastung der Rolle ist derart ausgestaltet, dass die Leine entgegen der Kraft der Feder von der Rolle abgerollt und durch die Kraft der gespannten Feder selbsttätig wieder auf die Rolle aufgerollt wird. Leine bezeichnet im Sinne der Erfindung jedes Mittel, das sich zur Verwendung als Longe oder als Teil einer Longe eignet. Hierbei ist ein Ende der Leine zu ihrer Aufnahme entweder unmittelbar oder mittelbar an der Rolle befestigt, das andere Ende ist zur Befestigung am Pferd (in der Regel durch eine lösbare Verbindung am Zaumzeug des Pferdes) ausgebildet. Das Longiermittel ist - abhängig von der Länge und Ausgestaltung der Longe - zur vollständigen oder teilweisen Aufwickelung der Leine auf der Rolle ausgestaltet. Das Mittel zur lösbaren Befestigung des Griffs der Longierpeitsche ist so ausgestaltet, dass die Longierpeitsche in Befestigungsposition bei der Verwendung des Longiermittels parallel zu der zum Pferd verlaufenden Leine ausgerichtet ist, also auf das an der Longe geführte Pferd zeigt und durch die entsprechende Bewegung des Longiermittels zum Touchieren und Führen des Pferdes genutzt werden kann. Das erfindungsgemäße Longiermittel besitzt den Vorteil, dass die Longe bei Benutzung nicht Unmittelbar durch die Innenfläche der Hand verläuft, wodurch Verletzungen vermieden werden können. Das erfindungsgemäße Longiermittel besitzt den weiteren Vorteil, dass die Longe beim Longieren gemeinsam mit der Longierpeitsche sicher in einer Hand geführt werden kann. Die Benutzung einer Longierpeitsche zusätzlich zur Longe ist beim Longieren sowohl zur Feinkorrektur des Bewegungsablaufs des Pferdes, als auch zur Dirigierung des Pferdes - etwa zur Verkleinerung oder Vergrößerung des Longierzierkels, d.h. des Radius' der Kreisbahn des Pferdes um den Longenführer erforderlich oder zumindest wünschenswert. Durch das erfindungsgemäße Longiermittel ist gewährleistet, dass hierbei beide Geräte sicher mit einer Hand bedient werden können, was dem Longenführer zusätzliche Möglichkeiten eröffnet: Der Longenführer kann, während er das Pferd führt, die freie Hand etwa zur Bedienung zusätzlicher akustischer Signalmittel nutzen oder mit dieser zusätzliche optische Signale geben. Ferner kann er im Bedarfs- oder Notfall mit der zweiten Hand auch ein Mobiltelefon oder Funkgerät bedienen. Durch das erfindungsgemäße Longiermittel wird ferner die Verwendung einer sog. "Doppellonge" zusammen mit einer Longierpeitsche erheblich erleichtert: Eine Doppellonge wird als spezielle Technik zur Erzielung besonderer Ausbildungs- und Trainingsziele genutzt. Bei der Verwendung einer Doppellonge verlaufen zwei Leinen zum Zaumzeug des Pferdes, die vom Longenführer mit beiden Händen wie Zügel gehalten werden. Soll gleichzeitig mit einer Doppellonge eine Longierpeitsche genutzt werden, muss diese mit einer Leine zusammen in eine Hand genommen werden, was sehr viel Übung erfordert, da sich die Longierpeitsche und der mit derselben Hand geführte Zügel gegenseitig behindern können. Durch das erfindungsgemäße Longiermittel wird die Verwendung einer Doppellonge vereinfacht, indem das Longiermittel als einer der beiden Zügel dient und in der anderen Hand der weitere Zügel gehalten wird. Da die Longierpeitsche hierbei an dem Longiermittel befestigt ist und nicht zusammen mit dem Zügel in der Hand geführt werden muss, ist die Handhabbarkeit insgesamt vereinfacht. Mit dem erfindungsgemäßen Longiermittel wird es dem Longenführer ferner auch ermöglicht, mit einem weiteren Longiermittel in der anderen Hand gleichzeitig ein zweites Pferd mit Longe und Longierpeitsche zu führen. Schließlich besitzt das erfindungsgemäße Longiermittel den Vorteil, dass es auch sicher durch einarmige Menschen genutzt werden kann, ohne auf die Nutzung einer Longierpeitsche verzichten zu müssen.

In einer konstruktiv einfachen und kostengünstig herstellbaren Ausgestaltung ist die federbelastete Rolle als Rolle mit Spiralfeder ausgestaltet. Die Spiralfeder ist hierzu um die zentrale Achse der Rolle herum spiralförmig angeordnet und an einem Ende an der Achse und am anderen Ende an der Rolle befestigt. Beim Abrollen der Leine dreht sich die Rolle entgegen der Zugkraft der Spiralfeder, wobei diese gespannt wird. Diese Spannung führt bei jeder Entlastung der Leine und gleichzeitig gelöster Arretierung zur gegensätzlichen Drehbewegung, wobei die Leine selbsttätig wieder aufgerollt wird.

Eine einfache Befestigung des Griffs der Longierpeitsche am Longiermittel wird erreicht, indem als Mittel zur lösbaren Befestigung des Griffs einer Longierpeitsche mindestens eine Federklammer vorgesehen ist. Hierzu wird der Griff der Longierpeitsche in die form- und kraftschlüssigen Federklammer(n) eingesetzt.

Eine variable Befestigung des Griffs der Longierpeitsche am Longiermittel wird erreicht, indem das Gehäuse mit einem parallel zur Verlaufsrichtung der Leine angeordneten Handgriff ausgebildet ist und der Handgriff gleichzeitig das Mittel zur lösbaren Befestigung des Handgriffs einer Longierpeitsche bildet, indem er eine parallel zur Verlaufsrichtung der Leine angeordnete Mulde zur vollständigen oder teilweisen formschlüssigen Aufnahme des Griffs einer Longierpeitsche aufweist und die Hand bei Benutzung sowohl den Handgriff, als auch den Griff der Longierpeitsche umschließt. Der Griff der Longierpeitsche wird so parallel zur Verlaufsrichtung der Leine formschlüssig in die Mulde des Handgriffs eingelegt und in seinen verbleibenden Freiheitsgraden durch die von der umschließenden Hand ausgeübte Muskelkraft fixiert. In dieser Ausgestaltung kann die Longierpeitsche jederzeit durch die Lockerung der Hand von dem Longiermittel gelöst und herausgenommen werden.

Eine stabilere Befestigung der Longierpeitsche in der vorbeschriebenen Ausgestaltung wird erreicht, indem zusätzlich mindestens ein weiteres Mittel zur lösbaren form- und/oder kraftschlüssigen Fixierung des Griffs der Longierpeitsche in der Mulde des Handgriffs vorgesehen ist. Hierdurch wird der Griff der Longierpeitsche auch in den verbleibenden Freiheitsgraden lösbar fest in der Mulde des Handgriffs gehalten und muss nicht durch Muskelkraft fixiert werden.

In der vorbeschriebenen Ausgestaltung wird der Griff der Longierpeitsche konstruktiv einfach und kostengünstig herstellbar durch mindestens einen Spanngurt in der Mulde des Handgriffs lösbar form- und kraftschlüssig fixiert. In Montageposition ist der Spanngurt hierbei über den in der Mulde sitzenden Griff der Longierpeitsche gespannt und an seinen Enden an hierfür vorgesehenen Befestigungsmitteln am Handgriff befestigt, wobei mindestens ein Ende lösbar befestigt ist, damit der Griff der Longierpeitsche wieder vom Handgriff gelöst werden kann.

In den beiden vorbeschriebenen Ausgestaltungen wird ein weiterer Vorteil erzielt, indem der Handgriff oder ein Teil des vom Gehäuse lösbar ausgestaltet ist, wobei der Handgriff oder lösbare Teil des Handgriffs mit einem Sicherungsmittel lösbar fixiert ist. Die an dem Longiermittel befestigte Longierpeitsche kann so zusammen mit dem Handgriff durch Lösung des Sicherungsmittels einfach von dem Longiermittel abgelöst werden, ohne dass das oder die form- oder kraftschlüssige(n) Befestigungsmittel gelöst werden müssen. Diese Einrichtung dient zum einen zur Sicherung, um die mit dem Pferd verbundene Longe erforderlichenfalls durch Lösung des Sicherungsmittels schnell vom Handgriff und der damit verbundenen Longierpeitsche trennen zu können. Zum anderen lässt sich die Longierpeitsche so leicht handhabbar unabhängig von der Longe nutzen, ohne das oder die form- oder kraftschlüssigen Befestigungsmittel gesondert vom Handgriff gelöst werden müssen.

Das erfindungsgemäße Longiermittel wird nachstehend unter Bezugnahme auf die beigefügten Zeichnungen anhand Eines Ausführungsbeispiels näher beschrieben:

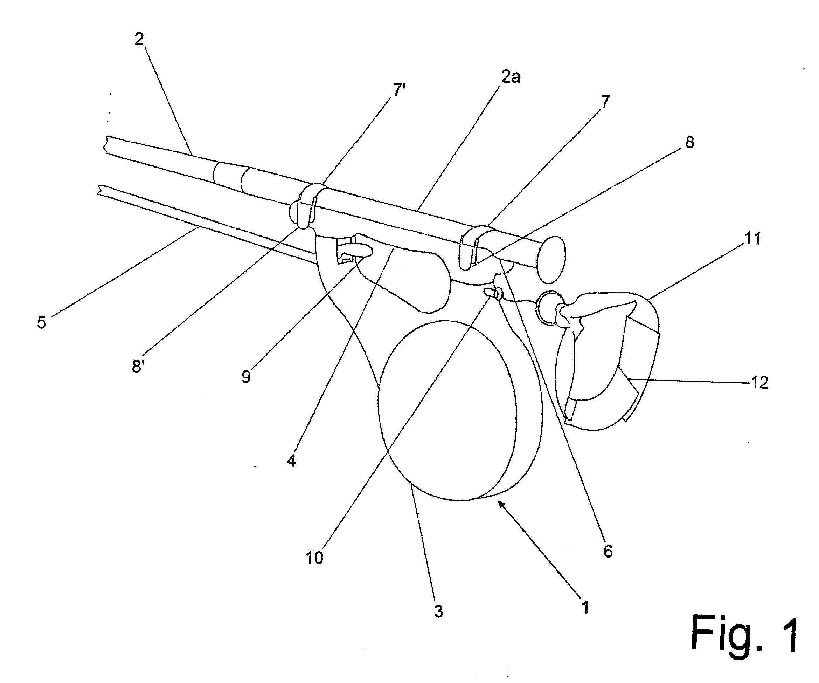

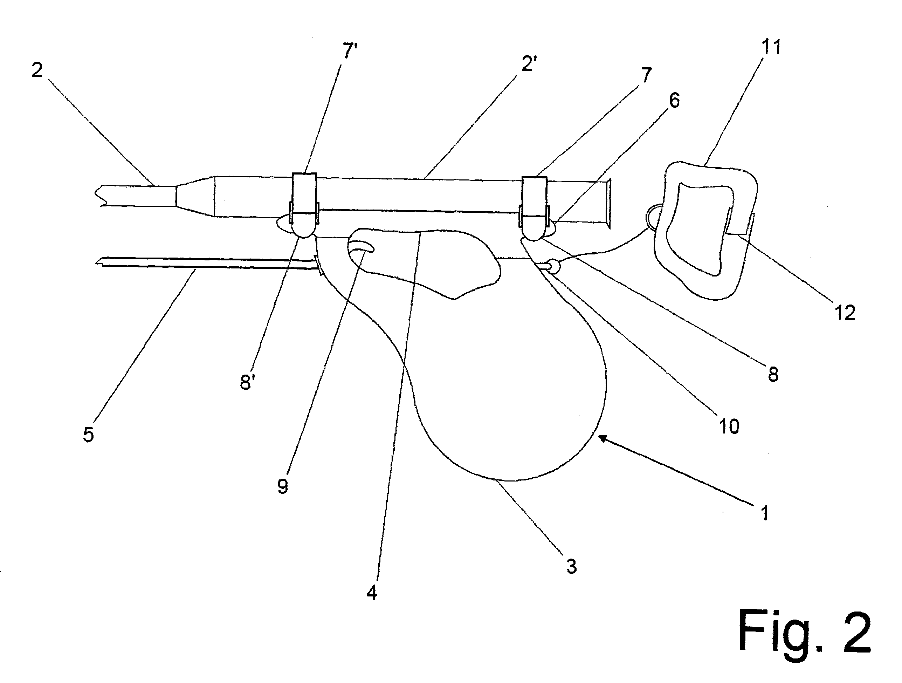

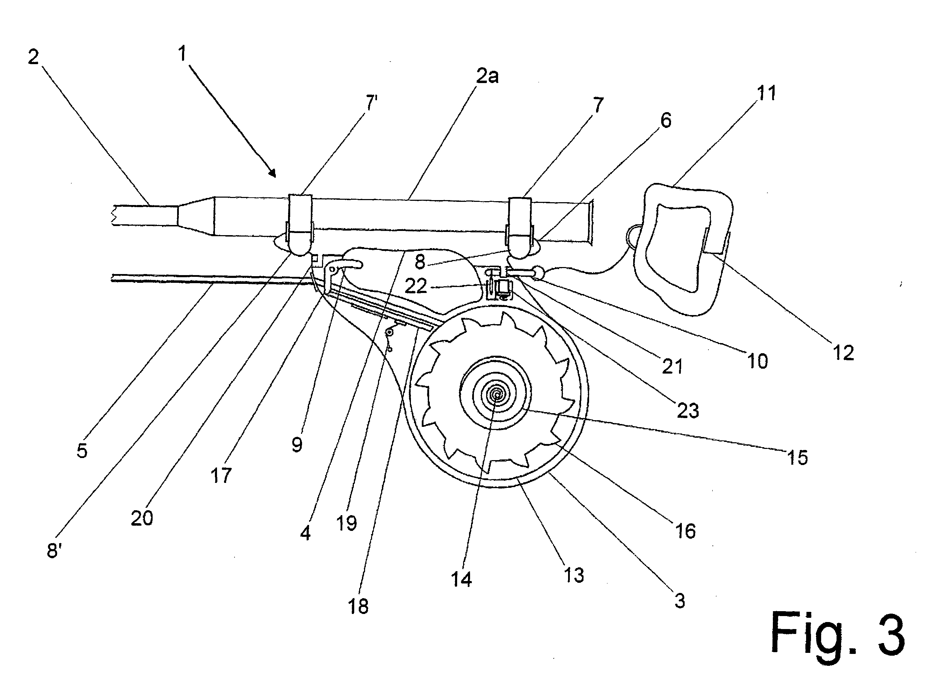

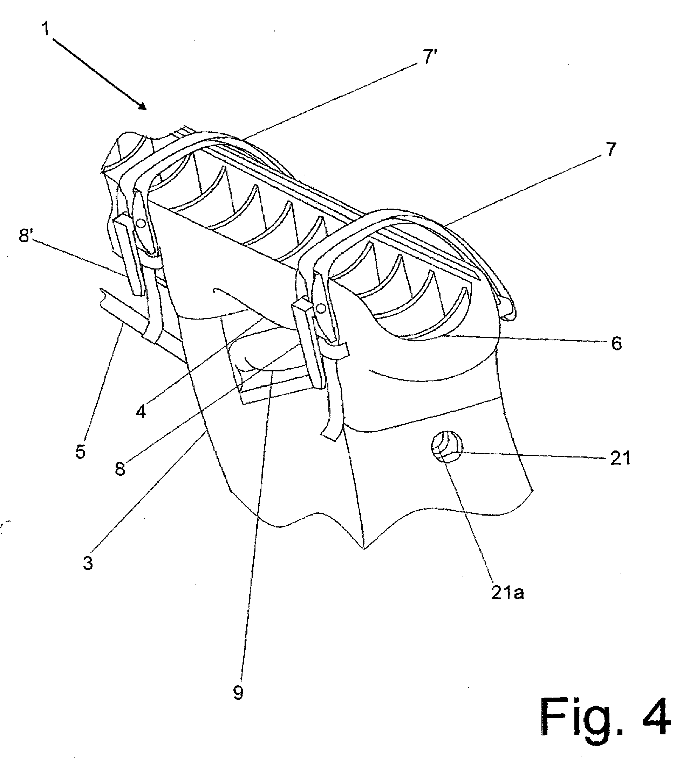

Fig. 1 zeigt das Longiermittel 1 mit montierter Longierpeitsche 2 (ausschnittsweise) in perspektivischer Darstellung. Fig. 2 zeigt das Longiermittel gemäß Fig. 1 in Aufsicht. Das Longiermittel 1 besteht aus dem Gehäuse 3, welches mit einem oberen Handgriff 4 ausgebildet ist. Der Handgriff 4 und die Longierpeitsche 2 sind parallel zur Verlaufsrichtung der Longierleine 5 (auschnittsweise) ausgerichtet, welche das Gehäuse 3 in Richtung des (nicht dargestellten) Pferdes verlässt. Der Handgriff 4 ist mit parallel zur Verlaufsrichtung der Longierleine 5 angeordneten Mulde 6 ausgebildet, in welcher der Griffbereich 2a der Longierpeitsche 2 in Querrichtung zur Longierleine 5 formschlüssig sitzt. Zusätzlich ist der Griffbereich 2a der Longierpeitsche 2 durch die Spanngurte 7 und 7' form- und kraftschlüssig in der Milde 6 fixiert. Hierzu sind die Spanngurte 7 und 7' in Querrichtung zur Longierleine 5 über den in der Mulde 6 sitzenden Griffbereich 2a der Longierpeitsche 2 gespannt und mit den Verschlüssen 8 und 8' am Handgriff 4 lösbar befestigt. Hierdurch ist die Longierpeitsche 2 nach oben formschlüssig fixiert, ferner üben die Spanngurte 7 und 7' in Längsrichtung parallel zur Mulde 6 einen Kraftschluss auf den Griffbereich 2a der Longierpeitsche 2 aus. Im Bereich des Handgriffs 4 ist das Gehäuse 3 mit der Taste 9 ausgebildet, über welche die Aufnahme und Ausgabe der Longierleine 5 arretiert wird. Der Handgriff 4 ist durch den Sicherungsstift 10, welcher mit der Handschlaufe 11 verbunden ist, lösbar am Gehäuse 3 fixiert. Bei Benutzung umgreift die Hand des Longenführers (nicht dargestellt) den Handgriff 4 des Longiermittels 1 gemeinsam mit dem in der Mulde 6 sitzenden Griffbereich 2a der Longierpeitsche 2 von oben, so dass die Taste 9 mit dem Zeigefinger bedient wird. Die mit einer Klettverbindung 12 ausgebildete Handschlaufe 11 wird hierbei am Handgelenk des Longenführers befestigt, wobei sie dieses umgreift. Fig. 3 zeigt das geöffnete Gehäuse 3 des Longiermittels 1 in Aufsicht. Die Longierleine 5 verläuft durch eine korrespondierende Öffnung im Hebel 17 der Taste 9 in das Gehäuse 3 wird dort von außen nach innen im Uhrzeigersinn verlaufend von der Rolle 13 aufgenommen, welche drehbeweglich auf dem zentralen Lagerzapfen 14 gelagert ist. Die Rolle 13 ist mit einer um den zentralen Lagerzapfen 14 im den Uhrzeigersinn von außen nach innen spiralförmig angeordneten Spiralfeder 15 ausgebildet. Die Spiralfeder 15 ist an ihrem äußeren Ende an der Rolle 13 und am inneren Ende am Lagerzapfen 14 befestigt. Zur Ausgabe der Longierleine 5 wird diese mit der Zugbewegung des Pferdes gegen den Uhrzeigersinn von der Rolle 13 abgerollt. Hierbei wird die Spiralfeder 15 ebenfalls gegen den Uhrzeigersinn gestreckt und dabei gespannt. Diese Spannung führt bei jeder Entlastung der Longierleine 5 zur Ausdehnung der Spiralfeder 15 und damit zur gegensätzlichen Drehbewegung der Rolle 13, wobei die Longierleine 5 wieder selbsttätig im Uhrzeigersinn aufgerollt wird. Zur Arretierung der Rolle 13 ist diese beidseitig mit den äußeren Zahnkränzen 16 und 16' (perspektivisch bedingt nicht dargestellt) ausgebildet. Bei Betätigung der Taste 9 drückt diese über den Hebel 17 entgegen der Federbelastung auf das mittels der vorgespannten Schenkelfeder 19 belastete Gabelstück 18, welches beidseitig in die Zahnkränze 16 und 16' greift und die Rolle 13 in ihrer Drehbewegung arretiert. Sobald die Taste 9 wieder entlastet wird, drückt die Schenkelfeder 19 das Gabelstück 18 wieder zurück, wodurch die Arretierung der Rolle 13 wieder gelöst wird. Der Handgriff 4 ist auf der bei Benutzung dem Pferd zugewandten Vorderseite des Gehäuses 3 mit dem Hakenelement 20 eingehakt. Auf der dem Pferd bei Benutzung abgewandten Rückseite des Gehäuses 3 ist der Handgriff 4 mit dem Verbindungszapfen 21 in das Gehäuse 3 eingesteckt. Fig. 4 zeigt zur Veranschaulichung der Befestigung des Handgriffs 4 am Gehäuse 3 eine perspektivische Ausschnittsdarstellung des rückwärtigen Teils des Gehäuses 3 (auschnittsweise) ohne die Longierpeitsche 2. Der Verbindungszapfen 21 besitzt eine Öffnung 21 a, durch welche der Sicherungsstift 10 hindurchgesteckt wird und den Handgriff 4 so im Gehäuse 3 fixiert. Der Sicherungsstift 10 ist mit dem Splint 22 gesichert, welcher in eine korrespondierende Nut des Sicherungsstifts 10 greift und diesen in axialer Bewegungsrichtung arretiert. Wird der Sicherungsstift 10 aus dem Gehäuse herausgezogen, wird der Splint 22 gespreizt und gibt den Sicherungsstift 10 frei. Nun kann der Handgriff 4 - ggf. zusammen mit der montierten Longierpeitsche 2 - vom Gehäuse gelöst werden. Zur erneuten Montage wird der Handgriff 4 wieder in das Gehäuse 3 eingesetzt und der Sicherungsstift 10 eingesteckt, wobei er durch die Öffnung des Verbindungszapfens 21 und geführt und in den Splint 22 gedrückt wird, bis dieser wieder in die Nut des Sicherungsstifts 10 greift und diesen arretiert. Der Verbindungszapfen 21 ist zur Erleichterung dieses Vorgangs über das Federmittel 23 leicht druckfederbelastet geführt.

### 4. Kurze Beschreibung der Zeichnungen:

- Fig.1: ist eine perspektivische Ansicht eines Longiermittels mit montierter Longierpeitsche.
- Fig. 2: ist eine Seitenansicht des Longiermittels gemäß Fig. 1.
- Fig. 3: ist eine Aufsicht des geöffneten Gehäuses des Longiermittels gemäß Fig. 1.
- Fig. 4: ist eine perspektivische Ausschnittsdarstellung des rückwärtigen Teils des Gehäuses des Longiermittels gemäß Fig. 1 ohne Longierpeitsche.

### 5. Gewerbliche Anwendbarkeit:

Das erfindungsgemäße Longiermittel eignet sich vornehmlich als Hilfsmittel zum Longieren bei der Ausbildung von Pferden mittels einer Longe und einer Longierpeitsche.

## Patentansprüche

1. Longiermittel (1), bestehend aus einem mit einem Handgriff (4) ausgebildeten Gehäuse (3), einer in dem Gehäuse (3) drehbeweglich gelagerten, in Aufrollrichtung federbelasteten Rolle (13) zur Aufnahme und Ausgabe einer Leine (5) und einer mechanisch wirkenden Arretierungsvorrichtung zur lösbaren Arretierung der Rolle (13), wobei die Arretierungseinrichtung derart ausgestaltet ist, dass sie mit der am Handgriff (4) befindlichen Hand bedient werden kann, **dadurch gekennzeichnet, dass** das Gehäuse (3) mit mindestens einem Mittel zur lösbaren Befestigung des Griffs (2a) einer Longierpeitsche (2) in paralleler Ausrichtung zur Verlaufsrichtung der Leine (5) ausgebildet ist.

2. Longiermittel (1) nach Anspruch 1, **dadurch gekennzeichnet, dass** die federbelastete Rolle (13) als Rolle (13) mit Spiralfeder (15) ausgestaltet ist.

3. Longiermittel (1) nach Anspruch 1 oder 2, **dadurch gekennzeichnet, dass** als Mittel zur lösbaren Befestigung des Griffs (2a) einer Longierpeitsche (2) mindestens eine Federklammer vorgesehen ist.

4. Longiermittel (1) nach Anspruch 1 oder 2, **dadurch gekennzeichnet, dass** das Gehäuse (3) mit einem parallel zur Verlaufsrichtung der Leine (5) angeordneten Handgriff (4) ausgebildet ist und der Handgriff (4) gleichzeitig das Mittel zur lösbaren Befestigung des Handgriffs (2a) einer Longierpeitsche (2) bildet, indem er eine parallel zur Verlaufsrichtung der Leine (5) angeordnete Mulde (6) zur vollständigen oder teilweisen formschlüssigen Aufnahme des Griffs (2a) einer Longierpeitsche (2) aufweist und die Hand bei Benutzung sowohl den Handgriff (4), als auch den Griff (2a) der Longierpeitsche (2) umschließt.

5. Longiermittel (1) nach Anspruch 4, **dadurch gekennzeichnet, dass** mindestens ein weiteres Mittel zur lösbaren form- und/oder kraftschlüssigen Fixierung des Griffs (2a) der Longierpeitsche (2) in der Mulde (6) des Handgriffs vorgesehen ist.

6. Longiermittel nach Anspruch 5, **dadurch gekennzeichnet, dass** der Griff (2a) der Longierpeitsche (2) durch mindestens einen Spanngurt (7, 7') in der Mulde (6) des Handgriffs (4) lösbar form- und kraftschlüssig fixiert ist.

7. Longiermittel (1) nach Anspruch 5 oder 6, **dadurch gekennzeichnet, dass** der Handgriff (4) vom Gehäuse (3) lösbar ausgestaltet ist, wobei der Handgriff (4) oder lösbare Teil des Handgriffs mit einem Sicherungsmittel (10) lösbar fixiert ist.

## Claims

1. Means of guidance (1), consisting of a body housing (3) featuring a handle (4), a roll (13) spring-loaded in roll-up direction and movably mounted in the body housing (3) for receipt and release of a lead (5) and a mechanical locking system for detachably locking the roll (13), where the locking system is designed in a way that it can be commanded by the hand at the handle (4) **characterized in that** the body housing (3) is designed with at least one means for detachably fixing the grip (2a) of a lunge whip (2) in parallel alignment to the direction of the lead (5).

2. Means of guidance (1) according to claim 1 **characterized in that** the spring-loaded roll (13) is designed as a roll (13) with spiral spring (15).

3. Means of guidance (1) according to claim 1 or 2 **characterized in that** at least one spring clip is provided as a means for detachably fixing the grip (2a) of a lunge whip (2).

4. Means of guidance (1) according to claim 1 or 2 **characterized in that** the body housing (3) is designed with a handle (4) arranged in parallel to the direction of the lead (5) and that the handle (4) also forms the means for detachably fixing the handle grip (2a) of a lunge whip (2) by featuring a recess (6) arranged in parallel to the direction of the lead (5) for full or partial form-fitting receipt of the grip (2a) of a lunge whip (2), where, when in use, the hand encloses both the handle (4) as well as the grip (2a) of the lunge whip (2).

5. Means of guidance (1) according to claim 4 **characterized in that** at least one further means for detachably fixing the grip (2a) of the lunge whip (2) in a form-fitting and / or force-fitting way is provided in the recess (6) of the handle.

6. Means of guidance according to claim 5 **characterized in that** the grip (2a) of the lunge whip (2) is fixed in a detachable form-fitting and force-fitting way by at least one tension belt (7, 7') in the recess (6) of the handle (4).

7. Means of guidance (1) according to claim 5 or 6 **characterized in that** the handle (4) is designed in a way that it is detachable from the body housing (3) where the handle (4) or the detachable part of the handle is detachably fixed with a safety agent (10).

## Revendications

1. Moyen pour longer (1) constitué d'un boîtier (3) doté d'une poignée (4), d'un rouleau (13) pivotant logé dans le boîtier (3) et d'un enrouleur commandé par ressort pour l'enroulement et le déroulement d'une longe (5) et d'un dispositif de blocage mécanique pour le blocage et le déblocage du rouleau (13), le dispositif de blocage étant conçu de façon à pouvoir être commandé de la main se trouvant sur la poignée (4), **caractérisé en ce que** le boîtier (3) est au moins doté d'un moyen pour la fixation amovible de la poignée (2a) d'un fouet (2) en alignement parallèle à la direction d'extension de la longe (5).

2. Moyen pour longer (1) selon la revendication 1, **caractérisé en ce que** le rouleau commandé par ressort (13) est conçu comme rouleau (13) à ressort en spirale (15).

3. Moyen pour longer (1) selon la revendication 1 ou 2, **caractérisé en ce qu'**au moins une sauterelle de fixation est prévue comme moyen pour la fixation amovible de la poignée (2a) d'un fouet (2).

4. Moyen pour longer (1) selon la revendication 1 ou 2, **caractérisé en ce que** le boîtier (3) est doté d'une poignée (4) disposée parallèlement à la direction d'extension de la longe (5) et **en ce que** la poignée (4) constitue en même temps le moyen pour la fixation amovible de la poignée (2a) d'un fouet (2), et présente une cavité (6) disposée parallèlement à la direction d'extension de la longe (5) pour le logement emboîté intégral ou partiel de la poignée (2a) d'un fouet (2) ; la main enveloppe aussi bien la poignée (4) et la poignée (2a) du fouet (2) lors de l'utilisation.

5. Moyen pour longer (1) selon la revendication 4, **caractérisé en ce qu'**au moins un autre moyen est prévu pour la fixation emboîtée et/ou par adhérence de la poignée (2a) du fouet (2) dans la cavité (6) de la poignée.

6. Moyen pour longer (1) selon la revendication 5, **caractérisé en ce que** la poignée (2a) du fouet (2) est fixée de façon amovible, emboîtée et par adhérence, par au moins une sangle (7, 7') dans la cavité (6) de la poignée (4).

7. Moyen pour longer (1) selon la revendication 5 ou 6, **caractérisé en ce que** la poignée (4) est conçue pour pouvoir être enlevée du boîtier (3), la poignée (4) ou la partie amovible de la poignée étant fixée de façon amovible avec un moyen de sécurité (10).
